# EUROPÄISCHE PATENTANMELDUNG

(11) **EP 1 936 248 A2**
(43) Veröffentlichungstag der Anmeldung: **25.06.2008**
(21) Anmeldenummer: 07023644.3
(22) Anmeldetag: 06.12.2007
(51) Int. Cl.: F16K 31/06, F16K 31/08

(54) **Elektromagnetventil für flüssige und gasförmige Medien**

(30) Priorität: 20.12.2006 DE 202006019176 U
(71) Anmelder: A. u. K. Müller GmbH & Co. KG, 40595 Düsseldorf (DE)
(72) Erfinder: Pipplies, Wilhelm, 47805 Krefeld (DE); Berger, Gerd, 40593 Düsseldorf (DE)
(74) Vertreter: Feder, Wolf-Dietrich

(57) **Zusammenfassung**

Ein Elektromagnetventil für flüssige und gasförmige Medien mit einem Ventilgehäuse (1), in dem eine Ventilkammer (2) angeordnet ist, die über einen Zulaufkanal (3) direkt mit einem Ventileingang (E) und über einen Ventilsitz (4) und einen Auslaufkanal (5) mit einem Ventilausgang (A) verbunden ist und mit einem am Ventilgehäuse (1) angeordneten Magnetsystem mit einer Magnetspule (6), in welcher ein Magnetanker (7') geführt ist, dessen eines dem Ventilsitz (4) zugewandtes Ende mit einem Ventilteller (9') verbunden ist und dessen anderes Ende einem mindestens teilweise in der Magnetspule (6) angeordneten Kopfstück (10') gegenüberliegt. Magnetanker (7') und das Kopfstück (10') sind als aus Kunststoff bestehende Hohlkörper ausgebildet, in deren Innenraum ein ferromagnetisches Material angeordnet ist. Das ferromagnetische Material kann als Zylinderstück aus Weicheisen ausgebildet sein oder auch aus Eisenspähnen oder aus Eisenpulver bestehen. Es kann auch aus einem oder mehreren Permanentmagneten bestehen.

## Beschreibung

Die Erfindung betrifft ein Elektromagnetventil für flüssige und gasförmige Medien mit den Merkmalen aus dem Oberbegriff des Patentanspruchs 1.

Derartige Elektromagnetventile sind an sich bekannt und beispielsweise in EP 1 596 109 A1 beschrieben.
Der Magnetanker und das Kopfstück des Magnetsystems derartiger Elektromagnetventile besteht im allgemeinen aus Stahl und zwischen dem Magnetanker und dem fest innerhalb der Magnetspule angeordneten Kopfstück ist eine Druckfeder eingeschaltet, die das Elektromagnetventil im nicht erregten Zustand der Magnetspule in der Geschlossenstellung festhält, in welcher der Ventilteller auf dem Ventilsitz aufliegt. Bei Erregung der Magnetspule wird der Magnetanker gegen die Kraft der Druckfeder in die Magnetspule hineingezogen und das Ventil öffnet.

Der Erfindung liegt die Aufgabe zugrunde, ein Elektromagnetventil mit den im Oberbegriff des Patentanspruchs 1 angegebenen Merkmalen so auszubilden, dass eine kostengünstigere Herstellung möglich ist und das Elektromagnetventil durch kleine kostengünstige Änderungen an unterschiedliche Anwendungsfälle anpassbar ist.

Die Lösung dieser Aufgabe erfolgt erfindungsgemäß mit den Merkmalen aus dem kennzeichnenden Teil des Patentanspruchs 1. Vorteilhafte Weiterbildungen sind in den abhängigen Ansprüchen beschrieben.

Ein Grundgedanke der Erfindung besteht darin sowohl den Magnetanker, als auch das Kopfstück nicht aus Metall, sondern aus Kunststoff herzustellen, wobei die notwendige Beeinflussbarkeit durch das von der Magnetspule erzeugte Magnetfeld dadurch erzielt wird, dass Magnetanker und Kopfstück als Hohlkörper aufgebaut sind, in deren Innenraum ein ferromagnetisches Material, also beispielsweise ein Zylinderstück aus Weicheisen, Eisenspähne oder Eisenpulver oder auch ein Permanentmagnet angeordnet ist. Die Kunststoffteile sind leicht und kostengünstig herstellbar und durch die Anordnung des ferromagnetischen Materials im Innenraum der Kunststoff-Hohlkörper werden die erforderlichen magnetischen Eigenschaften sichergestellt, wobei durch entsprechende Auswahl dieses ferromagnetischen Materials bezüglich der Menge, der Anordnung und der magnetischen Eigenschaften eine Anpassung des Ventils an unterschiedliche Anwendungsfälle erreichbar ist. Als besonders vorteilhaft hat sich erwiesen, wenn im Magnetanker und im Kopfstück Permanentmagnete, beispielsweise aus Ferrit, angeordnet sind, die je nach der Polungsrichtung zu einem im nicht erregten Zustand der Magnetspule schließenden oder öffnenden Ventil führen. Die Anordnung einer Druckfeder zwischen Magnetanker und Kopfstück ist dann grundsätzlich nicht erforderlich, da durch die Einwirkung der Permanentmagnete aufeinander, ein stabiler Zustand im nicht erregten Zustand der Magnetspule sichergestellt ist.

Weiterhin ist es in vorteilhafter Weise möglich, das erfindungsgemäße Ventil als bi-stabiles Ventil aufzubauen, was beispielsweise dadurch erreicht werden kann, dass im Kopfstück ein Permanentmagnet und im Magnetanker ein Eisenkern angeordnet sind und zwischen Kopfstück und Magnetanker eine Druckfeder angeordnet ist.

Im folgenden werden anhand der beigefügten Zeichnungen ein Ausführungsbeispiel für ein Elektromagnetventil nach dem Stand der Technik und ein Ausführungsbeispiel für ein erfindungsgemäßes Elektromagnetventil näher erläutert.

In den Zeichnungen zeigen:
Fig. 1 im Axialschnitt ein Elektromagnetventil nach dem Stand der Technik;
Fig. 2 in gegenüber Fig. 1 vergrößerter Schnittdarstellung den Bereich Z1 aus Fig. 1;
Fig. 3 in einer Darstellung analog Fig. 1 ein Elektromagnetventil nach der Erfindung;
Fig. 4 in einer Darstellung analog Fig. 2 den Bereich Z3 aus Fig. 3.

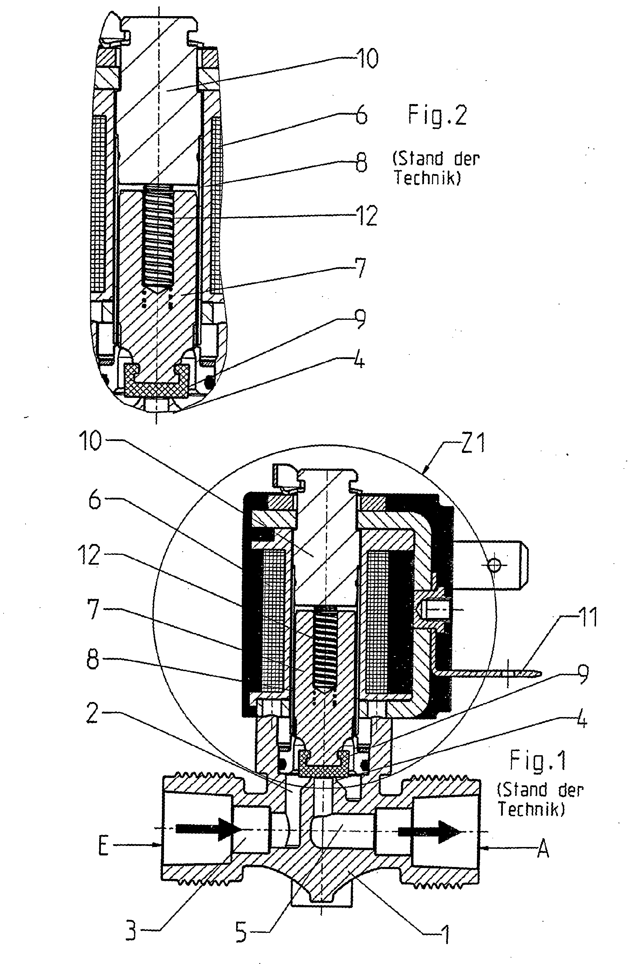

Es wird zunächst anhand der Figuren 1 und 2 der Aufbau eines Elektromagnetventils dargestellt, wie er dem Stand der Technik entspricht.

Das Ventil besitzt ein Ventilgehäuse 1, in dem eine Ventilkammer 2 angeordnet ist, die über einen Zulaufkanal 3 direkt mit einem Ventileingang E und über einen Ventilsitz 4 und einen Auslaufkanal 5 mit einem Ventilausgang A verbunden ist. Auf dem Ventilgehäuse 1 ist ein Magnetsystem angeordnet mit einer Magnetspule 6, die über Kontakte 11 mit Strom beaufschlagbar ist. Durch die Magnetspule 6 ist ein Führungsrohr 8 geführt, in welchem der Magnetanker 7 beweglich geführt ist. An dem dem Ventilsitz 4 zugewandten in Fig. 1 unteren Ende des Magnetankers 7 ist ein Ventilteller 9 befestigt, der sich beim Schließen des Ventils auf den Ventilsitz 4 auflegt. Das in Fig. 1 obere Ende des Magnetankers 7 liegt dem unteren Ende eines Kopfstücks 10 gegenüber, das fest innerhalb der Magnetspule 6 angeordnet ist. Zwischen dem Magnetanker 7 und dem Kopfstück 10 befindet sich eine Druckfeder 12, die im nicht erregten Zustand der Magnetspule 6 auf den Magnetanker 7 und damit den Ventilteller 9 eine Schließkraft ausübt. Magnetanker 7 und Kopfstück 10 bestehen aus magnetisierbarem Stahl, während das Führungsrohr 8 aus einem nicht magnetischen Werkstoff besteht. Der Spalt zwischen dem Führungsrohr 8 und dem Magnetanker 7 ist so groß, dass dort das durch das Elektromagnetventil zu steuernde Medium fließen kann, den Magnetanker 7 umspült und somit durch den verbleibenden Differenzdruck das Schließen des Ventils unterstützt. Soll das Ventil geöffnet werden, so wird die Magnetspule 6 erregt und die Kraft des entstehenden Magnetfeldes, die stärker ist als die Kraft der Druckfeder 12 und die Kraft des Mediums, bewegt den Magnetanker 7 nach oben, bis er vom Kopfstück 10 aufgehalten wird.

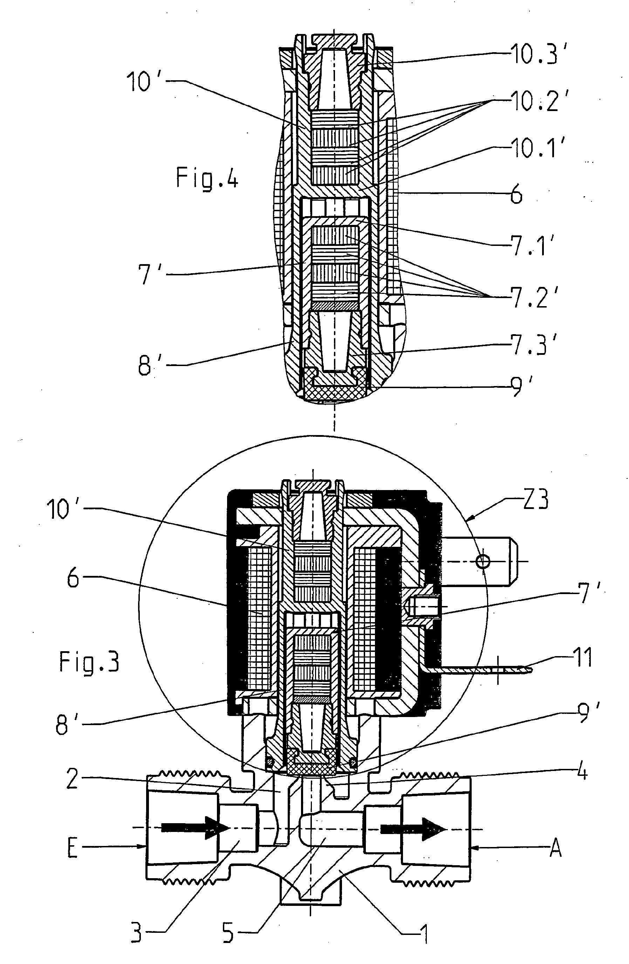

Die Figuren 3 und 4 zeigen in analoger Darstellung ein Elektromagnetventil, bei dem Magnetanker und Kopfstück in anderer Weise ausgestaltet sind. In den Figuren 3 und 4 werden für Bauteile, die genau der Ausführungsform nach Figur 1 und 2 entsprechen, die gleichen Bezugsziffern verwendet. Der Aufbau des Ventilgehäuses entspricht genau dem Aufbau des Ventilgehäuses 1 aus Figuren 1 und 2 und wird im folgenden nicht noch einmal erläutert.

Das am Ventilgehäuse 1 angeordnete Magnetsystem besitzt auch hier eine Magnetspule 6 mit elektrischem Anschluss 11.
Der Magnetanker 7' und an das Kopfstück 10' sind als zylindrische Hohlkörper aus Kunststoff, also als Kunststoff-Spritzgussteile ausgebildet. Sie besitzen jeweils im Inneren einen Hohlraum, der beim Magnetanker 7' nach unten offen und mittels eines Stopfens 7.3' verschlossen ist. An dem Stopfen 7.3' ist der dem Ventilsitz 4 gegenüberliegende Ventilteller 9' befestigt.
Der nach oben offene Innenraum des Kopfstücks 10' ist in ähnlicher Weise mit einem Stopfen 10.3' verschlossen. Im Inneren des Magnetankers 7' sind Permanentmagnete 7.2' übereinander angeordnet, die beispielsweise aus zylindrischen Plättchen aus Ferritmaterial bestehen können. In analoger Weise sind im Innenraum des Kopfstücks 10' Permanentmagnete 10.2' angeordnet, die gegebenenfalls als zylindrische Plättchen aus Ferritmaterial ausgebildet sein können.
An der oberen Seite ist der Innenraum des Magnetankers 7' durch eine Zwischenwand 7.1' abgeschlossen, während der Innenraum des Kopfstücks 10' an seiner Unterseite ebenfalls durch eine Zwischenwand 10.1' abgeschlossen ist. Die Zwischenwände bestehen wie Magnetanker und Kopfstück selbst aus Kunststoff.
Das Führungsrohr 8', in welchem der Magnetanker 7' geführt ist, ist im dargestellten Ausführungsbeispiel ebenfalls aus Kunststoff und einstückig an das Kopfstück 10' angeformt.

Mit dieser Anordnung lassen sich Variationsmöglichkeiten erreichen, die sehr verschiedene Anwendungsarten des Ventils gestatten. Wenn beispielsweise die Permanentmagnete 7.2' und 10.2' so angeordnet sind, dass die einander unmittelbar gegenüberliegenden Magnetpole im Magnetanker 7' und im Kopfstück 10' die gleiche Polarität besitzen, so wirkt im nicht erregten Zustand der Magnetspule 6 auf den Magnetanker 7' eine abstoßende Kraft, die den Magnetanker 7 nach unten drückt, was zum Schließen des Ventils führt. Dies entspricht einer Ausführungsform "monostabil normal geschlossen". Ordnet man die Permanentmagnete 7.2' und 10.2' so an, dass die unmittelbar einander gegenüberliegenden Magnetpole im Magnetanker 7' und im Kopfstück 10' ungleiche Polarität besitzen, so wird bei nicht erregter Magnetspule 6 der Magnetanker 7' angezogen, bis er am Kopfstück 10' anliegt und das Ventil geöffnet ist. Dies entspricht der Ausführungsform "monostabil normal geöffnet".

Die Anordnung einer Druckfeder zwischen Magnetanker und Kopfstück ist bei diesen Ausführungsformen nicht notwendig, da die Magnetfeldkraft die Druckfederkraft ersetzt. Ein Kleben des Magnetankers 7' ist ausgeschlossen, da zwischen den beiden Füllungen im Magnetanker 7' und dem Kopfstück 10' aus Permanentmagneten jeweils die Zwischenwände 7.1' des Magnetankers 7' und 10.1' des Kopfstücks 10' liegen. Mit der Auswahl der Dicke dieser Zwischenwände als Trennebenen ist eine weitere Variable zur Erzeugung der gewünschten jeweiligen Kräfte gegeben.

Selbstverständlich ist es möglich, den Innenraum des Magnetankers 7' und des Kopfstücks 10' mit anderen ferromagnetischen Materialien auszufüllen. Eine bi-stabile Ausführungsform kann in nicht dargestellter Weise erzeugt werden, indem im Kopfstück 10' Permanentmagnete und im Magnetanker 7' ein Eisenkern angeordnet werden und zusätzlich zwischen Magnetanker und Kopfstück eine Druckfeder eingeschaltet wird.

Grundsätzlich ist es auch möglich, sowohl im Magnetanker, als auch im Kopfstück einen Eisenkern anzuordnen und zwischen Magnetanker und Kopfstück eine Druckfeder einzuschalten.

## Patentansprüche

1. Elektromagnetventil für flüssige und gasförmige Medien mit einem Ventilgehäuse, in dem eine Ventilkammer angeordnet ist, die über einen Zulaufkanal direkt mit einem Ventileingang und über einen Ventilsitz und einen Auslaufkanal mit einem Ventilausgang verbunden ist und mit einem am Ventilgehäuse angeordneten Magnetsystem mit einer Magnetspule, in welcher ein Magnetanker geführt ist, dessen eines dem Ventilsitz zugewandtes Ende mit einem Ventilteller verbunden ist und dessen anderes Ende einem mindestens teilweise in der Magnetspule angeordneten Kopfstück gegenüberliegt, **dadurch gekennzeichnet, dass** der Magnetanker (7') und das Kopfstück (10') als aus Kunststoff bestehende Hohlkörper ausgebildet sind, in deren Innenraum ein ferromagnetisches Material (7.2', 10.2') angeordnet ist.

2. Elektromagnetventil nach Anspruch 1, **dadurch gekennzeichnet, dass** das im Magnetanker (7') und/oder dem Kopfstück (10') angeordnete ferromagnetische Material als Zylinderstück aus Weicheisen ausgebildet ist.

3. Elektromagnetventil nach Anspruch 1 oder 2, **dadurch gekennzeichnet, dass** das im Magnetanker (7') und/oder dem Kopfstück (10') angeordnete ferromagnetische Material aus Eisenspähnen oder Eisenpulver besteht.

4. Elektromagnetventil nach einem der Ansprüche 1 bis 3, **dadurch gekennzeichnet, dass** das im Magnetanker (7') und/oder dem Kopfstück (10') angeordnete ferromagnetische Material aus einem oder mehreren Permanentmagneten (7.2', 10.2') besteht.

5. Elektromagnetventil nach Anspruch 4, **dadurch gekennzeichnet, dass** die Permanentmagneten (7.2', 10.2') aus einem Ferritmaterial bestehen.

6. Elektromagnetventil nach Anspruch 4 oder 5, **dadurch gekennzeichnet, dass** in dem Magnetanker (7') und im Kopfstück (10') jeweils mindestens ein Permanentmagnet (7.2', 10.2') angeordnet ist, wobei die Anordnung derart ist, dass mindestens die unmittelbar einander gegenüberliegenden Magnetpole im Magnetanker (7') und im Kopfstück (10') gleiche Polarität besitzen.

7. Elektromagnetventil nach Anspruch 4 oder 5, **dadurch gekennzeichnet, dass** in dem Magnetanker (7') und im Kopfstück (10') jeweils mindestens ein Permanentmagnet (7.2', 10.2') angeordnet ist, wobei die Anordnung derart ist, dass mindestens die unmittelbar einander gegenüberliegenden Magnetpole im Magnetanker (7') und im Kopfstück (10') ungleiche Polarität besitzen.

8. Elektromagnetventil nach den Ansprüchen 2 oder 3 und einen der Ansprüche 4 oder 5, **dadurch gekennzeichnet, dass** zur Bildung eines bi-stabilen Ventils im Kopfstück ein Permanentmagnet und im Magnetanker ein Eisenkern angeordnet sind und zwischen Kopfstück und Magnetanker eine Druckfeder angeordnet ist.

9. Elektromagnetventil nach einem der Ansprüche 1 bis 8, **dadurch gekennzeichnet, dass** der Hohlkörper des Magnetankers (7') und/oder des Kopfstücks an der dem jeweils anderen Hohlkörper gegenüberliegenden Seite durch eine Zwischenwand (7.1', 10.1') abgeschlossen ist.

10. Elektromagnetventil nach Anspruch 9, **dadurch gekennzeichnet, dass** die voneinander abgewandten, offenen Enden der Hohlkörper mit einem Stopfen (7.3', 10.3') aus Kunststoff verschlossen sind.

11. Elektromagnetventil nach Anspruch 10, **dadurch gekennzeichnet, dass** der im Magnetanker (7') angeordnete Stopfen (7.3') den Ventilteller (9') trägt.

12. Elektromagnetventil nach einem der Ansprüche 9 bis 11, **dadurch gekennzeichnet, dass** an das Kopfstück (10') ein sich durch die Magnetspule (6) hindurch erstreckendes Rohr (8') aus Kunststoff einstückig angeformt ist, in dem der Magnetanker (7') geführt ist.
